# EUROPEAN PATENT SPECIFICATION

(11) **EP 2 447 929 B1**
(45) Date of publication and mention of the grant of the patent: **24.06.2015**
(21) Application number: 10425340.6
(22) Date of filing: 26.10.2010
(51) Int. Cl.: H04B 7/185, G08G 5/00

(54) **Ground station, network and method for a unified ground-to-air and air-to-ground communication system operating in VHF data link mode 2 technology**
Bodenstation, Netz und Verfahren für ein vereinheitlichtes Boden-Bord- und Bord-Boden-Kommunikationssystem, das in VHF-Data-Link-Mode-2-Technologie arbeitet
Station au sol, réseau et procédé pour un système de communication unifié sol-air et air-sol fonctionnant avec une technologie de liaison de données VHF en mode 2

(43) Date of publication of application: 02.05.2012
(73) Proprietor: SELEX ES S.p.A., Roma (IT)
(72) Inventor: Fantappie', Pierluigi, 50133 Firenze (IT)
(74) Representative: Cerbaro, Elena

(56) References cited:
- EP-A2- 2 109 087
- US-A1- 2002 155 833
- US-B1- 6 353 779
- SERKAN AYAZ ET AL: "Architecture of an IP-based aeronautical network", INTEGRATED COMMUNICATIONS, NAVIGATION AND SURVEILLANCE CONFERENCE, 2009. ICNS '09, IEEE, PISCATAWAY, NJ, USA, 13 May 2009 (2009-05-13), pages 1-9, XP031496236, ISBN: 978-1-4244-4733-6
- C-H ROKITANSKY ET AL: "Newsky - building a simulation environment for an integrated aeronautical network architecture", DIGITAL AVIONICS SYSTEMS CONFERENCE, 2007. DASC '07. IEEE/AIAA 26 TH, IEEE, PI, 1 October 2007 (2007-10-01), pages 4.B.4-1, XP031166352, ISBN: 978-1-4244-1107-8

## Description

The present disclosure relates to a system and a method for ground-to-air and air-to-ground communication, in particular for Air Traffic Control (ATC) and Airline Operational Control (AOC) message exchange using VDL mode 2 digital data link technology.

As is known, ground-to-air and air-to-ground communications, between ground station controllers and airline pilots, for air traffic control operations, have traditionally been based on voice messages. The use of voice, although it is a safe, worldwide and backwards-compatible solution, does not provide for increasing the sector capacity. In fact, the current channels for voice communications among ground station controllers and airline pilots are congested. Moreover, voice messages may be misinterpreted by either the ground station controllers and the pilots. The aforementioned facts may contribute to system inefficiencies such as aircraft delays, diminishing airline profits and, most importantly, may compromise the safety of passengers and flight crew.

To overcome the aforementioned limitations, it has been developed a digital data communication link which provides for digital communication between ground stations and pilots using data messages. A data message, on the contrary of a voice message, is unambiguous. Moreover, the transactions between ground station controllers and airline pilots are quicker, thus enhancing the overall system capability in handling air traffic.

The use of data link services is widely present in airlines operation. Through the system known as ACARS (Aircraft Communication Addressing and Reporting System) aircrafts exchange voluminous AOC information with their basis; at an increasing number of European airports they also exchange ATS-oriented messages, such as departure clearances.

However the few ACARS channels available in the aeronautical VHF band (especially across Europe) are close to saturation. Thus, industry has opted for a Very High Frequency (VHF) data link (DL) channel for resolving ACARS saturation. The VHF data link (VDL) technology provides for effective and reliable communications between pilots and air traffic controllers. Three existing and competing digital data link technologies are: VDL mode 2 (VDL2), VDL mode 3 (VDL3), and VDL mode 4 (VDL4). VDL mode 2 and mode 3 are primarily communication solutions, while VDL mode 4 also offers surveillance capabilities.

The VDL2 has been selected by the European Community, under the technical supervision of EUROCONTROL (the European organisation for the safety of air navigation), as a technology enabler that allows interoperability among Air Navigation Service Providers (ANSPs) according to the Single European Sky (SES) implementing rules. Examples of ANSPs are the "Società Nazionale di Assistenza al Volo" (ENAV) in Italy, the "Deutsche Flugsicherung" (DFS) in Germany, the "Direction des Services de la Navigation Aérienne" (DSNA) in France, etc. The data connection provided by VDL2 is primarily used by two types of applications (or services): Airline Operational Control (AOC) applications, and Air Traffic Control (ATC) applications. The former are related to routine airline operations and are used by airlines to optimize the flight operations (and their related cost) and are not safety critical, while the latter have been world-wide defined by the International Civil Aviation Organization (ICAO) as a controller-to-pilot data link messages suite that allows to communicate with airplanes, during flight, more efficiently than using traditional voice communications. The aforementioned suite is known with the acronym of CPDLC ("Controller-to-Pilot Data Link Communication") and is based on ATN ("Aeronautical Telecommunication Network") protocol. ATC and AOC applications have different performance requirements (e.g., ATC applications require most stringent grade of quality of service than AOC, for example a latency time of no more than 4 seconds) and are provided by a plurality of Airlines Communications Service Providers (ACSPs), each of them owning an own communication network. Main actors as ACSPs are ARINC (Aeronautical Radio, Inc.) and SITA. This means that, to access ATC and AOC applications, each airline company must subscribe with at least one among of the existing ACSPs, being unable to access the network of the others, non subscribed, ACSPs.

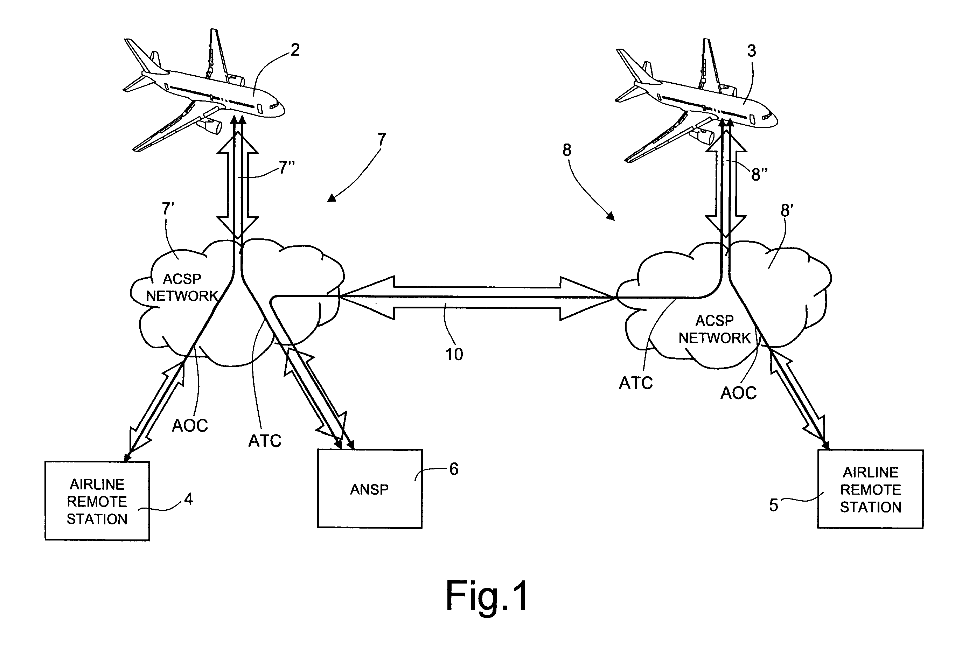

Figure 1 schematically shows a first aircraft 2 and a second aircraft 3 communicating over a respective VDL2 network with a respective first and second airline remote station 4, 5 and with a common third remote station 6 (the latter, in particular, for ATC services). The AOC messages sent by the first and the second aircraft 2, 3 are received by the respective first and second airline remote station 4, 5. The first and the second remote station 4, 5 are directly managed by the airline company owning the respective aircraft 2, 3; instead, the ATC messages sent by the first and the second aircraft 2, 3 are received by the third remote station 6, directly managed by an ANSP. The first aircraft 2 has, for example, a subscription with the ACSP ARINC, while the second aircraft 3 has, for example, a subscription with the ACSP SITA. As it is clear from this example, each of the two ACSPs manages an own communication network 7, 8.

Each of the communication networks 7, 8 comprises a respective ground network portion 7', 8', which is connected to the first and the second aircraft 2, 3 through a respective air-ground wireless connection 7", 8", in particular of VDL2 type. The air-ground wireless connections 7", 8" are bidirectional, meaning that data can be exchanged from the ground network portion to the aircrafts 2, 3 and viceversa.

Through their networks 7, 8, the ACSPs provide the airline companies with AOC service. Moreover, the third remote station 6 is connected with at least one of the communication networks 7, 8. Through their own network 7, 8, the ACSPs provides the ANSP with a ground-to-air and air-to-ground connection suitable for ATC service.

It is clear that, in order to be served, the ANSP has to subscribe with at least one among the available ACSPs. However, the ANSP has no control over the ATC messages managed and transported by the communication network of the subscribed ACSP.

Moreover, a connection among all the existing ACSPs network is required in order to guarantee that an ANSP, having a subscription with an ACSP other from the ACSP subscribed by a certain aircraft, will receive the ATC messages sent by that aircraft.

According to the example of Figure 1, the ANSP 6 has a subscription with the ACSP ARINC (owning the communication network 7) while the second aircraft 3 has a subscription with the ACSP SITA (owning the communication network 8). The ground network portions 7', 8' of the communication networks 7, 8 are connected each other by means of a connection 10. In this way, ATC messages sent by the second aircraft 3 and transported by the communication network 8 can be received by the ANSP 6 through the connection 10 and the ground network portion 7'.

Therefore, an ANSP that wants to implement ATC services over VDL2 has two alternatives: to buy the VDL2 service by one or both ACSPs or to setup its own network. The former approach can be costly on the medium-long term and the ANSP should rely on a third-party network whose performance are likely to be not adequate for ATC applications; the latter approach is limited by two main factors. The first one is dependent on the VDL2 airborne system. Typically, the VDL2 airborne system comprises only one radio, establishing only one VDL2 connection with a ground system; therefore, a VDL2 ground network managed by an ANSP will not be able to contact any aircraft, unless the network is identified by an identifier belonging to one of the two ACSPs (an ACSP partner of an ANSP). Nevertheless, the ANSP shall be able to directly control only the aircraft that have a subscription with its ACSP partner. The second limiting factor is related to the nature of the VDL2 networks, that currently operate on shared frequencies. However, the VDL2 radio link does not foresee the use of multiple frequencies to avoid interferences. This means that two ground-to-air VDL2 communication channels (one belonging to the ACSP, the other to the ANSP) in a same area will necessarily interfere with each other.

The document by Serkan Ayaz et al., "Architecture of an IP-based Aeronautical Network", Integrated Communications, Navigation And Surveillance Conference, 2009, IEEE, Piscataway, NJ, USA, pages 1-9, discloses the NEWSKY project which addresses the challenge to develop an initial design of a global, seamless aeronautical communication network with focus on air-ground communications and IPv6 technologies.

The conclusion is uncomfortable for ANSPs, which find it difficult to provide ATC services over VDL2 with a satisfactory quality of service and contained costs.

The aim of the present disclosure is to provide a system and a method for ground-to-air and air-to-ground communication which overcome the aforementioned limitations.

According to the present disclosure it is provided a ground station, a network and a method for ground-to-air and air-to-ground communications as defined in claims 1, 7 and 10, respectively.

For a better understanding of the disclosure, preferred embodiments thereof are now described, purely by way of non-limiting example and with reference to the annexed drawings, wherein:
- Figure 1 shows an end-to-end architecture of a communication system for providing ground-to-air and air-to-ground communication, according to a known embodiment;
- Figure 2 shows an end-to-end architecture of a communication system for providing ground-to-air and air-to-ground communication, according to an embodiment of the present disclosure;
- Figures 3 to 5 show a ground station according to different embodiments of the present disclosure;
- Figure 6 schematically shows the exchange of information between a ground station and two aircrafts belonging to the communication system of Figure 2, according to an embodiment of the present disclosure;
- Figure 7 is a block diagram showing steps of a method implemented by the ground station of Figure 2 and of Figures 3-5; and

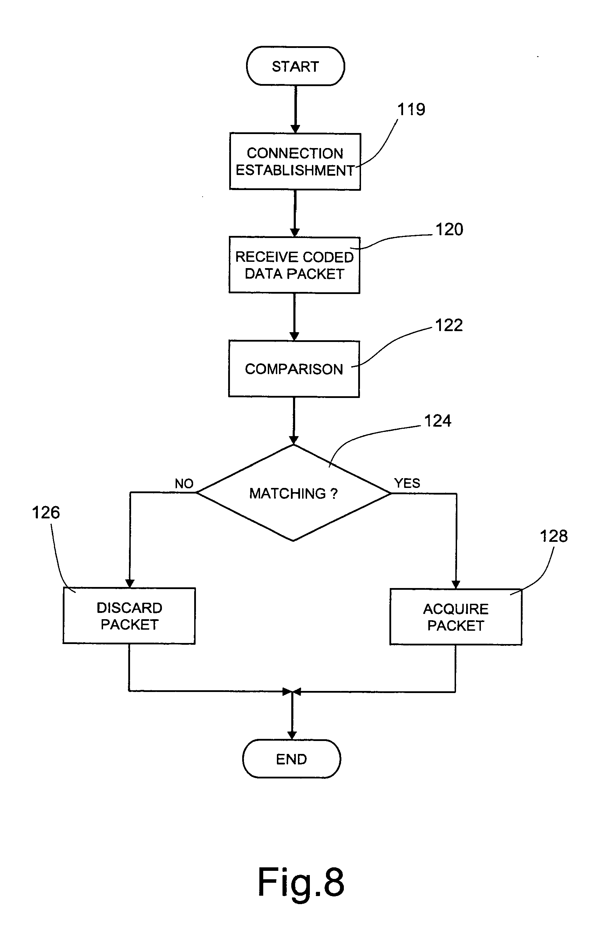

- Figure 8 is a block diagram showing steps of a nature and have a different scope, and moreover they have different quality of service requirements and are demanded by different entities (ANSPs demand ATC services and ACSPs demand AOC services), it would be reasonable to foresee the presence of a plurality of VDL2 ground subnetworks having different performances, one subnetwork providing ATC service with the required quality of service, and the other subnetwork providing AOC services only. The two ground subnetworks may possibly be managed by different entities, for example the ANSP may manage the subnetwork providing ATC service while the ACSP may manage the subnetwork providing AOC service.

On board of each aircraft there is a single VDL2 radio that must be shared for ATC and AOC operations and each on-board system can establish a connection with a single ground station, namely the ground station of the ACPS with which the airline company has a subscription.

Thus, a VDL2 ground network directly operated by an ANSP would not be able to directly interface with an on-board VDL2 radio, nor it would be able to interface with existing private VDL2 networks, unless a VDL2 service is bought from an ACSP, or an agreement between the ANSP and an ACSP is made so that each ground station of the ANSP is identified as a ground station of the ACSP with which the airline company has a contract.

However, the former solution is costly, while the latter is limited by a plurality of factors. For example, aircrafts having a contract with an ACSP other than the one with which the ANSP has an agreement are not handled by the ANSP; moreover, the ANSP does not have a direct control on network performances of the network portion exclusively managed by the ACPS providing the service.

The present Applicant has found that even accepting the coexistence of two VDL2 ground-to-air wireless communication channels (one managed by the ACSP, the other by the ANSP) in a same area, optimizing the ground station location distribution in order to minimize packet loss due to mutual radio interference, network performance cannot be optimum.

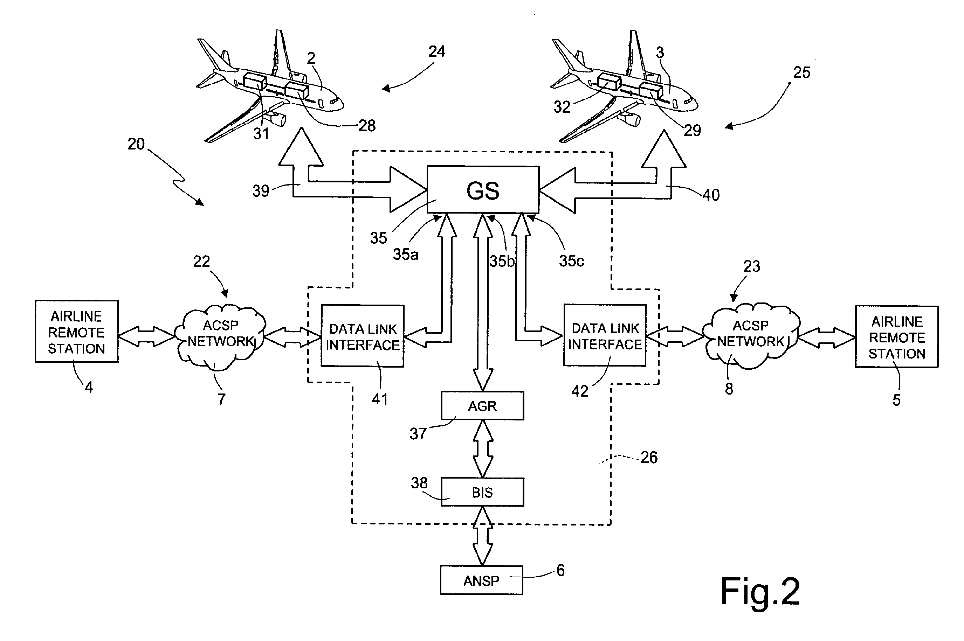

Figure 2 shows and end-to-end architecture of a communication system 20 configured to allow air-to-ground and ground-to-air AOC and/or ATC communications according to the present disclosure. Elements of figure 2 analogous to corresponding elements of figure 1 are not further described, and are indicated with the same reference number.

The communication system 20 comprises a first communication service provider (CSP) ground network 22, a second communication service provider (CSP) ground network 23, a first airborne network 24, a second airborne network 25 and a communication network infrastructure 26.

The first CSP ground network 22 comprises a first ACSP ground network 7 (for example owned and managed by ARINC), providing an AOC service to the first airline remote station 4, which is owned and managed by a first subscriber airline company. The second CSP ground network 23 comprises a second ACSP ground network 8 (for example owned and managed by SITA), providing an AOC service to the second airline remote station 5, which is owned and managed by a second subscriber airline company.

The first and the second airborne networks 24, 25 comprise respectively a first and a second VHF Digital Radio (VDR) 28, 29 arranged on board of a respective first and second aircraft 2, 3, and a first and a second Communication Management Unit (CMU) 31, 32 respectively arranged on board of the first and the second aircraft 2, 3 and respectively connected to the first and the second VHF digital radio 28, 29. The first and the second VHF digital radio 28, 29 and the first and the second communication management unit 31, 32 are configured to communicate in transmission and reception according to VDL2/ATN technology and protocol (for ATC services) and VDL2/ACARS technology (for AOC services).

The communication network infrastructure 26 supports VDL2/ATN technology and protocol and comprises a ground station (GS) 35, an air-ground router (AGR) 37, and a boundary intermediate system (BIS) 38. Moreover, the interfaces to each ACSP network are provided by a first and a second data-link service interface 41, 42. The ground station 35 communicates with the first and the second VHF digital radio 28, 29 of the first and second aircraft 2, 3 through a respective first and second air-ground wireless connection 39, 40, in particular of VDL2 type, as analogous to the air-ground wireless connection 7", 8" of Figure 1. However, according to an embodiment of the present invention, both first and second air-ground wireless connection 39, 40 share a common frequency range for transmission/reception and they are also managed by a common VDL2 radio (i.e., the ground station 35 established a single radio link which is commonly shared by the first and second air-ground wireless connection 39, 40). The ground station 35 exchanges with the first and second aircraft 2, 3 AOC and ATC messages, using the respective first and second air-ground wireless connection 39, 40.

According to an embodiment of the present invention, the first and second air-ground wireless connection 39, 40 are established on a same VDL2 channel. Due to the fact that the VDL2 protocol relies on a p-persistent Carrier-Sense Multiple Access (CSMA) scheme for radio channel access, the integration of the first and second air-ground wireless connection 39, 40 into the same VDL2 channel minimizes the interferences by reducing the number of ground stations to the bare minimum.

The ground station 35 is communicatively coupled, through an own input/output interface 35b, to the air-ground router 37; the air-ground router 37 is, in turn, communicatively coupled to the boundary intermediate system 38. The boundary intermediate system 38 is then communicatively coupled to the third remote station 6. According to the disclosed embodiment, the third remote station 6 is owned by an ANSP or, in more general terms, by a third entity different from the ACSPs owning the first and second CSP ground networks 22, 23. The third remote station 6 is thus communicatively coupled to the ground station 35 through the air-ground router (AGR) 37 and the boundary intermediate system (BIS) 38 network elements. These network elements implement the ATN protocol stack, on which the CPDLC protocol is based, according to what has been standardized by ICAO.

The air-ground router 37, and the boundary intermediate system 38 may be formed by commercially available industrial computers provided with routing capabilities over OSI ("Open System Interconnection") protocol. The air-ground router 37 provides routing of data packets to and from the ground station 35, while the boundary intermediate system 38 provides routing of data packets to and from the third remote station 6. The air-ground router 37 and the boundary intermediate system 38 may be implemented as a single router which provides routing of data packets directly from the ground station 35 to the third remote station 6 and viceversa; however, rules currently in force in some countries only foresee the presence of two autonomous routing devices (i.e., AGR 37 and BIS 38), connected together. The air-ground router 37 and the boundary intermediate system 38 are mandatory required for the ATC services implementation only.

The third remote station 6 is configured to receive from the ground station 35, through the air-ground router 37 and the boundary intermediate system 38, ATC messages. The third remote station 6 is also configured to send ATC messages to the first and second aircraft 2, 3, through the path formed by the boundary intermediate system 38, the air-ground router 37 and the ground station 35.

The AOC messages sent by the first and the second aircraft 2, 3 and received by the ground station 35 may be directed to anyone among the existing first and second CSP air-ground networks 22, 23 (in Figure 2 only two CSP ground networks 22, 23, each owned by an ACSP, are shown, but in principle there could be more than two networks). The ATC messages sent by the first and the second aircraft 2, 3 and received by the ground station 35 may be directed to any other ANSP station that can be reached by the first and the second aircraft 2, 3 through the AGR 37 and BIS 38 network elements (in Figure 2 only a single third remote station 6 is shown, and thus the ATC messages are directed to the third remote station 6; however, other remote stations, managed by an ANSP, may be connected to the BIS 38 or to the ground station 35 through different AGR and BIS network elements).

The communication network infrastructure 26 is connected to the first and the second CSP air-ground network 22, 23 through a respective first and second data-link service interface 41, 42. More in particular, the data-link service interface 41, 42 are connected to the ground station 35 through own respective input/output interfaces 35a and 35c, to receive, respectively, AOC messages directed to the first airline remote station 4 and AOC messages directed to the second airline remote station 5. Thus, the first data-link service interface 41 acts as an interface between the ground station 35 and the first CSP air-ground network 22, while the second data-link service interface 42 acts as an interface between the ground station 35 and the second CSP air-ground network 23. The ground station 35 and the first and second CSP networks 7, 8 are completely decoupled and they do not have to rely on a same common architecture.

The input/output interfaces 35a, 35c of the ground station 35 provide for a segregated data flow (in particular, AOC message exchange). In this way, the ground station 35 acts as if it was double. Moreover, also the input/output interface 35b provides for a data flow (in particular, ATC message exchange) which is segregated from the data flow from/to input/output interfaces 35a, 35c.

During use, the ground station 35 notifies its presence to the first and second aircraft 2, 3 by periodically broadcasting messages, which are known as GSIFs ("Ground Station Information Frames"). Each GSIF contains relevant system information, such as availability of ATN connections (for ATC services), availability of AOC connections, and identification information (in particular, a VDL2 system mask, which is a code, uniquely identifying only one among the available ACSPs).

Upon reception of a GSIF message by the first and the second VHF digital radio 28, 29 of the first and second aircraft 2, 3, the information carried by such a GSIF message are elaborated by the respective first and second communication management unit 31, 32. Each first and second communication management unit 31, 32 is configured to compare the VDL2 system mask contained in the GSIF message with an own ACSP system mask (which is a code, uniquely identifying only one among the available ACSPs, for example equal to the VDL2 system mask), stored in a proper respective database (not shown) of the first and second communication management unit 31, 32. The ACSP system mask uniquely identifies one among the existent ACSPs. In case of positive comparison, i.e., the received VDL2 system mask matches with the stored ACSP system mask, and if the ground station 35 supports the required services with the proper signal quality estimated by the aircraft, the ground station 35 is selected by the respective first or second communication management unit 31, 32 to perform a link establishment (or a link handoff, as needed); otherwise, no link establishment or link handoff with that ground station 35 takes place.

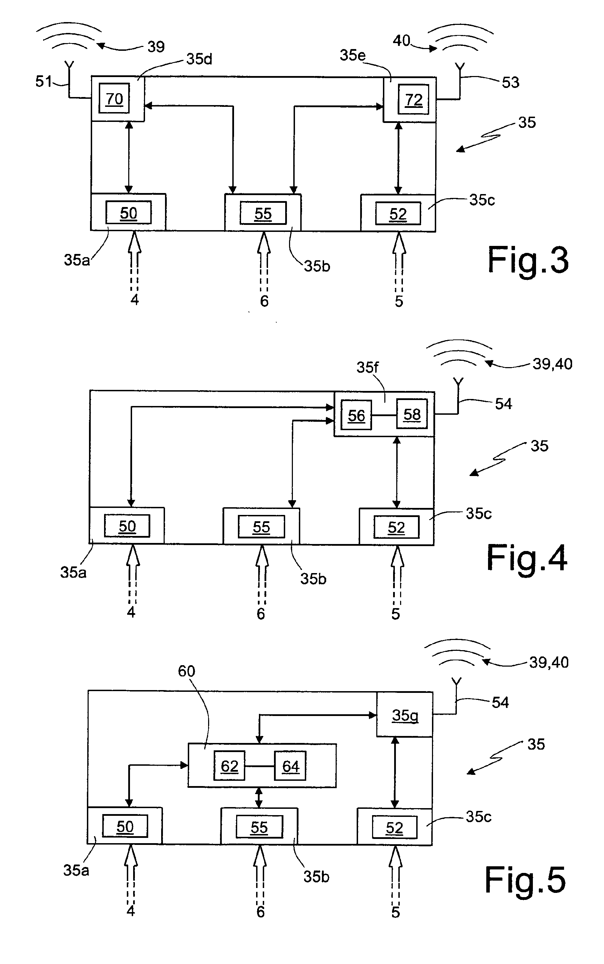

Figure 3 shows schematically a ground station 35 according to an embodiment of the present disclosure.

The ground station 35 of Figure 3 comprises the input/output interfaces 35a, 35b, and 35c which are configured to receive, respectively, data information from the first airline remote station 4, the third remote station 6 and the second airline remote station 5. The exact configuration of the input/output interfaces 35a, 35b, and 35c can be chosen among known interfaces so as to allow connection and exchange of information between the ground station 35 and, respectively: the first airline remote station 4 (through the first communication service provider ground network 22); the third remote station 6 (through AGR 37 and BIS 38); and the second airline remote station 5 (through the second communication service provider ground network 23).

The ground station 35 of Figure 3 further comprises a first wireless transmission interface 35d and a second wireless transmission interface 35e. The first and second wireless transmission interfaces 35d, 35e are coupled with a respective antenna 51, 53 and are configured to provide a VDL mode 2 digital data link over which transmit and receive messages to and from the first and second aircraft 2, 3. The first wireless transmission interface 35d and the second wireless transmission interface 35e are, for example, transmission/reception apparatuses of a known type.

More particularly, the first and the second wireless transmission interface 35d and 35e comprises each a VDL2 radio of a known type and, optionally, a POA (Plain Old ACARS) radio, of a known type. The POA radio operates according to the set of ACARS communications protocols in effect before the introduction of VDL2 and may be useful to communicate with ACARS-based systems which do not support VDL2.

Preferably, the wireless transmission interfaces 35d, 35e comprise each two VDL2 radio and two POA radio, for redundancy reasons. Accordingly, each VDL2 radio and each POA radio may have an own antenna, for both transmission and reception, or two antennae, one for transmission and one for reception. In the latter case, the VDL2 radio and the POA radio may transmit and/or receive simultaneously over the same frequency range or over closer frequency ranges. To avoid possible interferences it is advisable to couple each antenna with an own filter (for example a resonant cavity filter) and space apart the antennae from some meters up to some tents of meters.

The input/output interface 35a is connected to the first wireless transmission interface 35d so as to provide to the latter data information received from the first airline remote station 4, in a packet format which is readable by the first wireless transmission interface 35d. To this end, the input/output interface 35a comprises a packet data interface 50. It is clear that the exact packet format depends upon the type of the first wireless transmission interface 35d employed. The first wireless transmission interface 35d, upon reception of data packet from the input/output interface 35a, codes said data packets according to the VDL2 standard, by means of proper coder/decoder functions 70 of a known type. Then, through the antenna 51, transmits such coded packets over the first air-ground wireless connection 39.

The same applies to the input/output interface 35c. In fact, the input/output interface 35c is connected to the second wireless transmission interface 35e so as to provide to the latter data information received from the second airline remote station 5, in a packet format which is readable by the second wireless transmission interface 35e. To this end, the input/output interface 35c comprises a packet data interface 52. Also in this case, the exact packet format depends upon the type of the second wireless transmission interface 35e employed. The second wireless transmission interface 35e, upon reception of data packet from the input/output interface 35c codes, by means of a coder/decoder 72 (implemented either in hardware or software), said data packets according to the VDL2 standard. Then, through the antenna 53, transmits such coded packets over the second air-ground wireless connection 40.

The input/output interface 35b is connected to both the first and second wireless transmission interface 35d, 35e. In fact, the input/output interface 35b receives from the third remote station 6 ATC messages which must be sent to both the first and second aircraft 2, 3, independently on the particular subscription of the first and second aircraft to one among the available ACSPs. The ATC messages received by the input/output interface 35b are then provided to the first and second wireless transmission interfaces 35d, 35e in a packet format which is readable by the first and second wireless transmission interfaces 35d, 35e. To this end, the input/output interface 35b comprises a packet data interface 55, of a known type. The first and second wireless transmission interfaces 35d, 35e upon reception of ATC data packets from the input/output interface 35b, codes said data packets according to the VDL2 standard, and, through the antennae 51, 53, transmit such coded packets over the first and second air-ground wireless connections 39, 40.

The connections between the input/output interface 35a and the first wireless transmission interface 35d, between the input/output interface 35b and the first and second wireless transmission interfaces 35d, 35e, and between the input/output interface 35c and the second wireless transmission interfaces 35e are bidirectional, so that data packets received by the first and second wireless transmission interfaces 35d, 35e from aircrafts 2, 3 are decoded by the respective coder/decoder 70, 72 and provided to the input/output interfaces 35a, b, c. The input/output interfaces 35a, b, c then provide the received data packets to the first, third, and second remote stations 4, 6, 5 respectively.

Figure 4 shows a ground station 35 according to a further embodiment of the present disclosure.

The ground station 35 of Figure 4 differs from the ground station 35 of Figure 3 in that it comprises a single wireless transmission interface 35f, connected to an own antenna 54.

The input/output interfaces 35a, 35b, 35c are bidirectionally connected to the wireless transmission interface 35f so as to provide to the latter data information received from the first, second and third remote station 4, 5, 6 in a packet format which readable by the wireless transmission interface 35f and, viceversa, to provide to first, second and third remote station 4, 5, 6 information (data packets) received from the wireless transmission interface 35f. The wireless transmission interface 35f, upon reception of data packet from the input/output interfaces 35a, b, c, codes said data packets according to the VDL2 standard, and, through the antenna 54, transmits such a coded packets over both the first and the second air-ground wireless connection 39, 40. The wireless transmission interface 35f may comprise a memory 56 and a processor 58. The memory 56 and the processor 58 cooperates so as to define a queue processing technique for servicing conflicting demands by ordering process according to a "first-come, first-served" behavior (or "Last-In Last-Out" - LILO).

The wireless transmission interface 35f comprises at least a VDL2 radio, of a known type and, optionally, at least a POA radio, of a known type. Preferably, the wireless transmission interface 35f comprises two VDL2 radio and two POA radio, for redundancy reasons. Accordingly, each VDL2 radio and each POA radio may have an own antenna, for transmission and reception, or two antennae, one for transmission and one for reception. In the case of redundant antennae, the VDL2 radio and the POA radio may transmit and/or receive simultaneously over the same frequency range or over closer frequency ranges. To avoid possible interferences it is advisable to couple each antenna with an own filter (for example a resonant cavity filter) and space apart the antennae from some meters up to some tents of meters.

According to an embodiment of the present invention, the wireless transmission interface 35f shall broadcast coded packets over channel commonly shared by the first and second aircraft 2, 3.

Figure 5 shows a ground station 35 according to a further embodiment of the present invention. The ground station 35 of Figure 5 differs from the ground station 35 of figure 4 in that it comprises a single wireless transmission interface 35g which does not include a memory 56 and a processor 58 configured for defining and managing a LILO stack. Instead, the ground station 35 of Figure 5 comprises a manager unit 60 bidirectionally connected to the wireless transmission interface 35g. The manager unit 60 comprises a memory 62 and a processor 64 cooperating so as to define a queue processing technique for servicing conflicting demands by ordering process according to a "first-come, first-served" behavior (Last-In Last-Out, or LILO, stack), thus having the function of the memory 56 and processor 58 of the embodiment of Figure 4. The input/output interfaces 35a, b, c are bidirectionally connected to the manager unit 60 so as to transmit/receive to/from the manager unit 60 AOC and ATC messages and/or generic data information.

For all the embodiments shown and described with reference to Figures 3 to 5, the input/output interface 35a may include the first data-link service provider 41, and the input/output interface 35c may include the second data-link service provider 42. Accordingly, the input/output interface 35b may include the air-ground router 37, and the boundary intermediate system 38. In this way, the ground station 35 itself forms the communication network infrastructure 26.

The wireless transmission interface 35g shall broadcast coded packets over channel commonly shared by the first and second aircraft 2, 3.

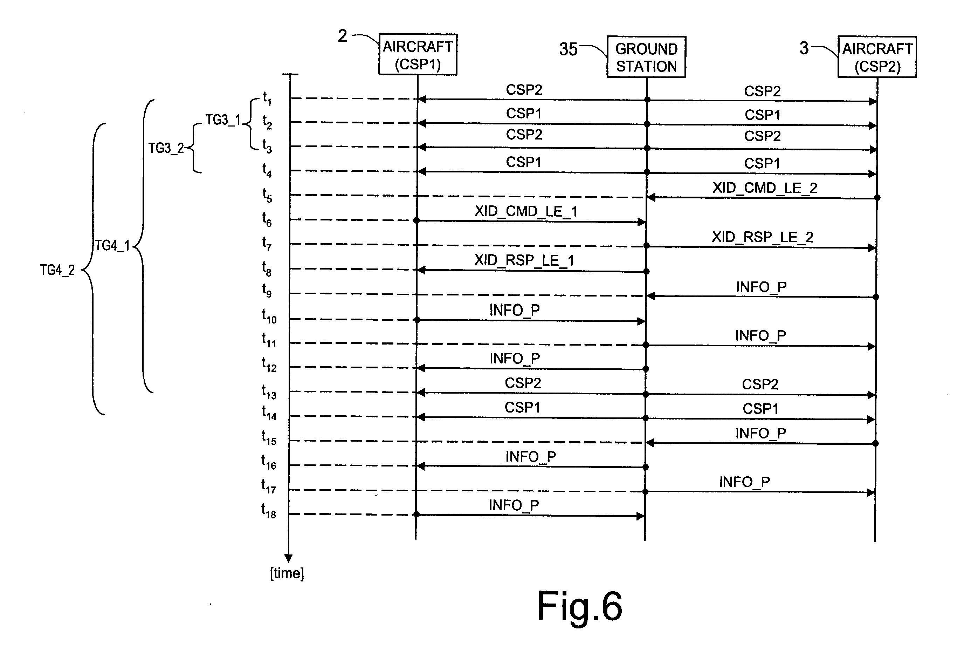

Figure 6 shows, schematically, the exchange of information between the ground station 35 and the first and second aircraft 2, 3, according to an embodiment of the present disclosure.

According to figure 2, the first and the second aircraft 2, 3 communicate with the ground station 35 through the first and the second air-ground wireless connection 39, 40. As already described, according to an embodiment of the present invention, the first and the second air-ground wireless connection 39, 40 may share a common radio channel, thus sharing a common frequency range for transmission and/or reception of data. The first aircraft 2 has a contract with the manager of the first ACSP ground network 7 (for example, according to what previously described, ARINC), while the second aircraft 3 has a contract with the manager of the second ACSP ground network 8 (for example, according to what previously described, SITA).

The first ACSP ground network 7 is identified by a first VDL2 system mask indicated as CSP1 in Figure 6, and the second ACSP ground network 8 with a second VDL2 system mask indicated as CSP2 in Figure 6.
The ground station 35 broadcasts, at time instant t1, a first GSIF message, carrying, among other information, also the second VDL2 system mask CSP2. The first GSIF message is received by both the first and the second aircraft 2, 3. However, only the second aircraft 3 recognizes the second VDL2 system mask CSP2 as a valid code (identifying the second ACSP ground network 8, with which the second aircraft 3 has a subscription). The first aircraft 2 discards the first GSIF message.

Then, at time instant t2, the ground station 35 broadcasts a second GSIF message, carrying, among other information, also the first VDL2 system mask CSP1. The second GSIF message is received by both the first and the second aircraft 2, 3. The first aircraft 2 recognizes the first VDL2 system mask CSP1 as a valid code (identifying the first ACSP ground network 7, with which the first aircraft 2 has a subscription). The second aircraft 3 discards the second GSIF message.

The first and second GSIF messages are thus broadcasted on the same channel at successive time instants, thus avoiding interferences.

After a time interval TG3_1, comprised between 100 seconds and 120 seconds, preferably equal to 110 seconds, from time instant t1, if no ground-to-air data packet have been transmitted, the ground station 35 broadcasts (time instant t3) a third GSIF message, analogous to the first GSIF message, carrying the CSP2 mask.

Ground-to-air data packet may not be transmitted in case of low data traffic, or for any other reason dependent on end-to-end applications.

Analogously, after a time interval TG3_2, equal to the time interval TG3_1, if no ground-to-air data packets have been transmitted, the ground station 35 broadcasts (time instant t4) a fourth GSIF message, analogous to the second GSIF message, carrying the CSP1 mask.

The third and fourth GSIF messages are received and elaborated by the first and second aircrafts 2, 3 both of which identify the possibility of being served by the ground station 35.

Then, at time instant t5, the second aircraft 3, having recognized the CSP2 mask as a code corresponding to the ACSP with which it has a subscription, sends to the ground station 35 a request for service (XID_CMD_LE_2 message).

Analogously, at time instant t6, the first aircraft 2, having recognized the CSP1 mask as a code corresponding to the ACSP with which it has a subscription, sends to the ground station 35 an own request for service (XID_CMD_LE_1 message).

The XID_CMD_LE_1 and XID_CMD_LE_2 messages are used for mobility management purposes and are independent from the required service (ATC or AOC). As said, the AOC service is provided by an ACSP (e.g., ARINC or SITA) through its own CSP ground network 22 or 23, while the ATC service is provided by an ANSP.

With particular reference to the AOC service, the ground station 35, upon verification that the second aircraft 3 is entitled to be served by the second CSP ground network 23, accepts the request for service by sending a confirmation message (XID_RSP_LE_2 message, time instant t7) and connects the second aircraft 3 to the second CSP ground network 23. An exchange of information packets (INFO messages, time instants t9, t11) can then take place between the second aircraft 3 and the second airline remote station 5, through the ground station 35, the second data-link service provider 42, and the second CSP ground network 23.

Analogously, the ground station 35 verifies if the first aircraft 3 is entitled to be served by the first CSP ground network 22, and, in positive case, accepts the request for service by sending a confirmation message (XID_RSP_LE_2 message, time instant t8) to the first aircraft 2, connecting the first aircraft 2 to the first CSP ground network 22. An exchange of information packets (INFO messages, time instants t10, t12) can then take place between the first aircraft 2 and the first airline remote station 4, through the ground station 35, the first data-link service provider 41, and the first CSP ground network 22.

Figure 6 shows, as an example, an information packet INFO_P sent by the ground station 35 to the first and second aircraft 2, 3 and a respective information packet INFO_P received by the ground station 35 from the first and second aircraft 2, 3. However, it is clear that more information packets INFO_P may be sent and received from and by the ground station 35 and the first and second aircrafts 2, 3.

At time instant t13, after a time interval TG4_1 from the time instant t1, the ground station 35 broadcasts a fifth GSIF message analogous to the first and third GSIF message, in particular carrying the second VDL2 system mask CSP2. For example, the time interval TG4_1 has a value of 100 seconds (or higher), as defined by VDL2 specifications.

Then, at a successive time instant t14, after a time interval TG4_2 from the time instant t2, the ground station 35 broadcasts a sixth GSIF message analogous to the second and fourth GSIF message, in particular carrying the first VDL2 system mask CSP1. The time interval TG4_2 is, for example, equal to the time interval TG4_1.

The first and second GSIF messages can therefore be received by aircrafts other than the first and second aircraft 2, 3 (not shown). Such other aircrafts identifies and accepts the message carrying the CSP1 mask and discards the message carrying the CSP2 mask, or viceversa, according to their affiliation with a specific ACSP.

Then, the exchange of information messages (INFO_P packets) between the ground station 35 and the first and second aircrafts 2, 3 continues.

The role of time intervals TG4_1 and TG4_2 is that of allowing new aircrafts to decode a GSIF transmitted from the ground station 35 and to establish a link with the ground station 35. The TG3 timer alone, which causes the generation of the GSIF uplink on its expiration after a non-traffic period, cannot guarantee the presence of GSIFs in case of ground stations experiencing remarkable traffic loads.

In general terms, a single ground station 35 broadcasts two different, interlaced, GSIF messages, each GSIF message carrying a different VDL2 system mask (or VDL2 address, CSP1 and CSP2). In this way, a single ground station 35 behaves as if it was double. Therefore, a single ground station 35 is able to notify to the aircrafts the presence of two different VDL2 service connections, one belonging to the first communication service provider ground network 22 (e.g., owned by ARINC) and the other belonging to the second communication service provider ground network 23 (e.g., owned by SITA). Moreover, the information message exchange between each aircraft 2, 3 and the network to which each respective aircraft 2, 3 has a subscription involves the intermediation of a same, single, ground station 35.

As already described with reference to figure 2, the third remote station 6, which is directly managed by an ANSP, is connected to the ground station 35 through the air-ground router 37, and the boundary intermediate system 38. In this way, the third remote station 6 does not need to subscribe with one of the available communication service providers (e.g., ARINC or SITA) to exchange messages, in particular ATC messages, with the first and/or the second aircraft 2, 3.

The ground station 35, during the previously described link establishment and message exchange steps (see Figure 6 and related description), further broadcasts, using the previously described GSIFs messages, also the air-ground router ATN address, owned by the ANSP , univocally identifying the network that the third remote station 6 belongs to.

The ANSP ATN address can be used by an aircraft to establish an ATN connection with the third remote station 6.

Upon reception, by the ground station 35, of a request for ATC service coming from the first and/or the second aircraft 2, 3 the ground station 35 uses the previously established VDL2 connection between the respective aircraft 2, 3 and the third station 6 to exchange ATN packets, coded inside VDL2 INFO frames. The first and second CSP ground network 22, 23 are not involved in this operation.

It is evident that special care should be taken to maintain AOC traffic to/from the two CSP ground networks 22, 23 separated from the ATC traffic to/from the third station 6, providing, for example, dedicated interfaces and completely segregated data logging strategies at the ground station side.

Data information to be transmitted to the aircrafts 2, 3 (uplink packets) can arrive to the ground station 35 from at least three sources: from the first CSP ground network 22 (ARINC network), from the second ground network 23 (SITA network), of from the third remote station 6 (ANSP station). Each of the uplink packets may be formatted according to a different format, e.g. ACARS or ATN, that must be carried over the established VDL2 link. The ground station 35 is thus configured to receive a plurality of different packet formats, interpret them, and format the uplink packets so that they can be multiplexed and transmitted over the VDL2 air-ground wireless connection 39, 40.

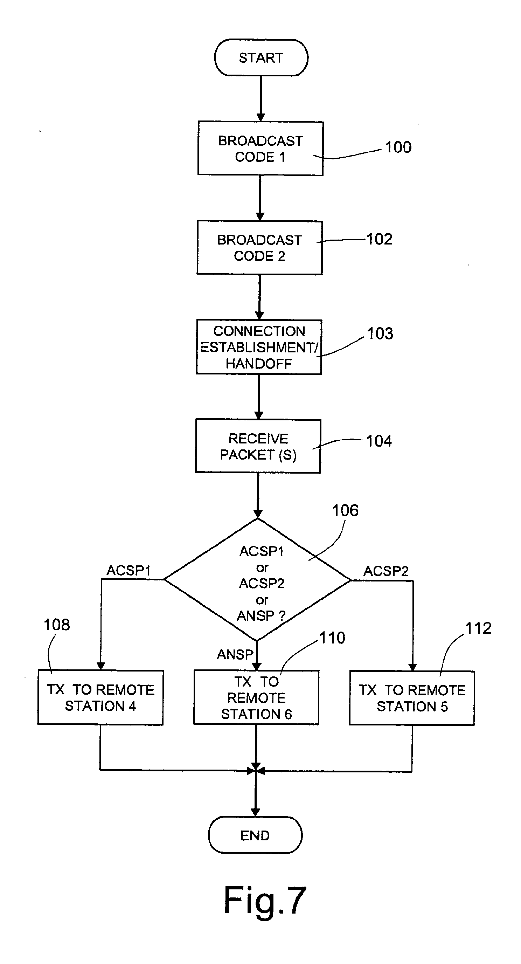

Figure 7 is a block diagram showing steps of a method implemented by the ground station 35 in more general terms with respect to Figure 6.

In Figure 7 it is supposed that steps of identification preceding the exchange of information packets INFO_P are already ended. The transmission of steps 100 and 102 refers to information packets INFO_P.

When a data packet, either an AOC or ATC message, has to be transmitted to the first and/or second aircraft 2, 3, the ground station 35, in particular through the wireless transmission interface(s) 35d, 35e, or 35f, or 35g according to the embodiment shown in Figures 3-5, broadcasts (step 100) a first packet carrying data information along with a first mask or code (e.g., CSP1 mask), identifying one among the available ACSPs.

Then (step 102), the ground station 35 broadcasts a second packet, along with a second mask or code different from the first mask or code (e.g., CSP2 mask) and identifying the other available ACSP.

Then (step 103), a linkestablishment/link handoff phases between ground station 35 and first and/or second aircraft 2, 3 take place, according to what has already been described with reference to Figure 6.

Then (step 104), the ground station 35 listens to the channel to receive data packets from the first and/or second aircraft 2, 3.

Upon reception of a packet, the ground station 35 checks (step 106) whether the received packet is directed to the first airline remote station 4 (through the respective ACSP network, referenced as ACSP1 in figure 7), or to the second airline remote station 5 (through the respective ACSP network, referenced as ACSP2 in figure 7), or to the third remote station 6 belonging to the ANSP. Such a check is based on a comparison between codes (e.g., the same CSP1 or CSP2 masks or codes, and/or Protocol Identifiers) carried by the received data packet and a respective code(s) stored in a memory of the ground station 35.

Then, on the basis of a result of such a check, the received data packet is provided to one among the input/output interface 35a (step 108), input/output interface 35b (step 110), or input/output interface 35c (step 112), and then transmitted, respectively, to the first airline remote station 4, or to the third remote station 6, or to the second airline remote station 5.

Figure 8 is a block diagram showing steps of a method which can be implemented by each aircraft 2, 3.

At step 119, a proper connection is established with the ground station 35 (according to what has already been described with reference to Figure 6).

The, step 120, assuming that the connection of step 119 has been successfully established, the aircraft 2, 3 receives a coded data packet, i.e., the packet broadcasted by the ground station at step 100 or, equivalently, step 102 of Figure 7.

Then, step 122, the aircraft 2, 3 checks whether the mask or code (e.g., CSP1 or CSP2) carried by the received packet matches with an own mask or code stored in a memory of the aircraft 2, 3 (for example, such a comparison is executed by a software program stored in the communication management unit 31, 32).

In this way, it is checked whether the received data packet is addressed to that aircraft 2, 3 or not (124). In negative case (i.e., the data packet is not addressed to that aircraft 2, 3), the packet cannot be decoded and it is discarded (step 126). Otherwise (step 128), the packet is accepted and decoded, and the aircraft 2, 3 can use the information carried by that packet.

From an examination of the characteristics provided according to the present disclosure, the advantages that it enables emerge clearly.

According to the present disclosure, a plurality of networks, each of them providing a different service, coexists on the ground side and share a single common ground-to-air channel. The establishment of the channel and the data transmission on the channel are managed by a single ground station 35, thus avoiding to incur in any interference problem. The stringent quality of service required by ANSPs for ATC traffic can be reached.

Another important advantage is the general saving of resources, if the network is optimized in this way: besides the obvious infrastructure cost reduction, less ground stations means a significant saving in terms of space, power consumption and electro-magnetic hazard; therefore the present invention goes in the "environment respect" direction.

Moreover, the reduction of interference means an increase of spectrum available without the need of requiring new frequencies, which are a precious resource.

Furthermore, the ANSP remote station 6 is connected to the ground station 35 without the need for subscribing with an ACSP to provide the ATC service to airline companies. That ensures an high quality of service value, since the network connecting the ANSP remote station 6 to the ground station 35 may be deployed and managed directly by the ANSP.

It is also important to note that this model can bring advantages for ACSPs, because in some cases they could not be obliged to support high financial efforts for developing their own VDL2 networks in a certain Country: they can use the ANSP one, with additional advantage in terms of network resilience and best ground station site selection, as this network must primarily work for ATC services.

Finally, this invention allows ANSP entering the VDL2 market scenario without being obliged to rely on ACSP networks only. This feature is therefore favouring free market and competition.

Finally, it is clear that modifications and variations may be made to the embodiments described and illustrated herein, without thereby departing from the scope of protection of the present disclosure, as defined in the annexed claims.

For example, a management agent through the network gateway can be made available upon request by the ACSPs in order to browse log files reporting their AOC traffic, and to monitor the ground station status.

In case of introduction of second and third VDL2 frequencies, it shall be possible to apply this model to the sharing of these frequencies too, optimizing the overall traffic.

## Claims

1. A ground station (35) for working in an air-ground network (20) for air-to-ground and ground-to-air communication, the air-ground network (20) including at least an air navigation service provider remote station (6), a first airline remote station (4), and a second airline remote station (5), the ground station (35) comprising:
- a first communication interface (35a) connectable to the first airline remote station (4) configured for providing for a first segregated data flow for Airlines Operational Communication message exchange between the ground station (35) and the first airline remote station (4) ;
- a second communication interface (35b) connectable to the air navigation service provider remote station (6) configured for providing for a second segregated data flow for Air Traffic Control message exchange between the ground station (35) and the air navigation service provider remote station (6);
- a third communication interface (35c) connectable to the second airline remote station (5) configured for providing for a third segregated data flow for Airlines Operational Communication message exchange between the ground station (35) and the second airline remote station (5);
- means configured for establishing (35d, 35e) a broadcast wireless communication channel (39, 40) of VDL mode 2 type for air-to-ground and a ground-to-air communication;
- means configured for establishing (35d; 35f; 35g), over said broadcast wireless communication channel, a first communication data link (39) with a first aerial vehicle (2), the first communication data link being a VDL mode 2 digital data link;
- means configured for establishing (35e; 35f; 35g), over said broadcast wireless communication channel, a second communication data link (40) with a second aerial vehicle (3), the second communication data link being a VDL mode 2 digital data link;
- means configured for exchanging (35b, 35d, 35e), using said first and second communication data link (39, 40), Air Traffic Control messages between the air navigation service provider remote station (6) and the first and, respectively, the second aerial vehicle (2, 3);
- means configured for exchanging (35a, 35d; 35f; 35g), using said first communication data link (39), Airlines Operational Communication messages between the first airline remote station (4) and the first aerial vehicle (2); and
- means configured for exchanging (35c, 35e; 35f; 35g), using said second communication data link (40), Airlines Operational Communication messages between the second airline remote station (5) and the second aerial vehicle (3).

2. The ground station according to claim 1, wherein the air-ground network (20) further includes a first communication service provider network (22) and a second communication service provider network (23), the ground station (35) being configured for being connectable with the first and the second airline remote station (4, 5) through, respectively, the first and the second communication service provider network (22, 23).

3. The ground station according to claim 2, wherein the first communication service provider network (22) is configured for operating according to a first protocol format, and the second communication service provider network (23) is configured for operating according to a second protocol format, the first interface (35a) including a first packet format converter for allowing exchange of airlines operational communication messages between the first communication service provider network (22) and the ground station (35); and the third interface (35c) including a second packet format converter for allowing exchange of airlines operational communication messages between the second communication service provider network (23) and the ground station (35).

4. The ground station according to claim 2 or 3, further comprising an air-ground router (37), configured for establishing ATN connections with the air navigation service provider remote station (6), providing mobile routing procedures in a transparent way to aircraft pilots and flights controllers, and supporting controller-to-pilot data link communications messages implementing ATC services; and
a boundary intermediate system (38) configured for establishing connections between different routing domains, in particular with boundary ATN networks belonging to other ANSPs.

5. The ground station according to any one of the preceding claims, wherein the first aerial vehicle (2) has a first memory storing a first code, and the second aerial vehicle (3) has a second memory storing a second code, the ground station further comprising:
- means configured for broadcasting, over the first and the second communication data link (39, 40), at a first time interval, a first identification message carrying a third code identifying the first airline remote station (4); and
- means configured for broadcasting, over the first and the second communication data link (39, 40), at a second time interval, a second identification message carrying a fourth code identifying the second airline remote station (5).

6. The ground station according to any one of the preceding claims, wherein said means configured for establishing (35d, 35e; 35f; 35g) the first data communication link (39) and the second data communication link (40) comprise a shared VDL mode 2 radio.

7. An air-ground network (20) for air-to-ground and ground-to-air communication, comprising:
- a ground station (35) according to any one of claims 1 to 6;
- at least a first airline remote station (4);
- at least a second airline remote station (5);
- a first communication service provider network (22), communicatively coupled to the first interface (35a) of the ground station (35), connecting the first airline remote station (4) to the ground station (35);
- a second communication service provider network (23), communicatively coupled to the third interface (35c) of the ground station (35), connecting the second airline remote station (5) to the ground station (35);
- at least an air navigation service provider remote station (6), communicatively coupled to the second interface (35b) of the ground station (35).

8. The network according to claim 7, further comprising a first aerial vehicle (2) having a first memory storing a first code and being communicatively coupled with the ground station (35) through a first communication data link (39), and a second aerial vehicle (3) having a second memory storing a second code and being communicatively coupled to the ground station (35) through a second communication data link (40), the ground station (35) further comprising:
- means configured for broadcasting, over the first (39) and the second (40) communication data link, at a third time interval, a third identification message carrying a fifth code identifying the first communication service provider network (22); and
- means configured for broadcasting, over the first (39) and the second (40) communication data link, at a fourth time interval, a fourth identification message carrying a sixth code identifying the second communication service provider network (23),
the first aerial vehicle (2) being configured for:
- receiving the third and the fourth identification message;
- verifying which one among the fifth and the sixth code matches with the first code stored in the first memory; and
- on the basis of a result of said verification, establishing a communication with the first or the second communication service provider network (22, 23) through the ground station (35),
the second aerial vehicle (3) being configured for:
- receiving the third and the fourth identification message;
- verifying which one among the fifth and the sixth code matches with the second code stored in the second memory; and
- on the basis of a result of said verification, establishing a communication with the first or the second communication service provider network (22, 23) through the ground station (35).

9. The network according to claim 8, wherein the first communication data link (39) and the second communication data link (40) are established over a common VDL mode 2 channel.

10. A method for air-to-ground and ground-to-air communication, comprising the steps of:
- establishing, by a ground station (35), a broadcast wireless communication channel (39, 40) of VDL mode 2 type for air-to-ground and ground-to-air communication;
- establishing, by the ground station (35) over the broadcast wireless communication channel, a first communication data link (39) with a first aerial vehicle (2), the first communication data link being a VDL mode 2 digital data link;
- establishing, by the ground station (35) over the broadcast wireless communication channel, a second communication data link (40) with a second aerial vehicle (3), the second communication data link being a VDL mode 2 digital data link;
- communicatively coupling a first airline remote station (4) to a first interface (35a) of the ground station (35);
- providing, by the first interface (35a), a first segregated data flow for Airlines Operational Communication message exchange between the ground station (35) and the first airline remote station (4);
- communicatively coupling an air navigation service provider remote station (6) to a second interface (35b), different from said first interface, of the ground station (35);
- providing, by the second interface (35b), a second segregated data flow for Air Traffic Control message exchange between the ground station (35) and the air navigation service provider remote station (6);
- communicatively coupling a second airline remote station (5) to a third interface (35c) of the ground station (35);
- providing, by the third interface (35c), a third segregated data flow for Airlines Operational Communication message exchange between the ground station (35) and the second airline remote station (5);
- connecting, by the ground station (35), the air navigation service provider remote station (6) with said first aerial vehicle (2) through the first communication data link (39), allowing Air Traffic Control message exchange between the air navigation service provider remote station (6) and the first aerial vehicle;
- connecting, by the ground station (35), the first airline remote station (4) to the first aerial vehicle (2) through the first communication data link (39), allowing Airlines Operational Communication message exchange between the first airline remote station (4) and the first aerial vehicle; and
- connecting, by the ground station (35), the second airline remote station (5) to the second aerial vehicle (3) through the second communication data link (40), allowing Airlines Operational Communication message exchange between the second airline remote station (5) and the second aerial vehicle.

11. The method according to claim 10, wherein the steps of establishing, by the ground station (35), the first and the second communication data link (39, 40) comprises establishing the first and the second communication data link (39, 40) over a same frequency range.

12. The method according to claim 10 or 11, wherein the step of communicatively coupling the first airline remote station (4) to the first interface of the ground station (35) comprises deploying a first communication service provider network (22) and communicatively coupling the first airline remote station (4) and the ground station (35) to the first communication service provider network (22); and the step of communicatively coupling the second airline remote station (5) to the third interface of the ground station (35) comprises deploying a second communication service provider network (23) and communicatively coupling the second airline remote station (5) and the ground station (35) to the second communication service provider network (23).

13. The method according to any one of claims 10-12, wherein the first aerial vehicle (2) has a first memory storing a first code, and the second aerial vehicle (3) has a second memory storing a second code,
the method further comprising the steps of:
- broadcasting, by the ground station (35), over the first (39) and the second (40) communication data link, at a first time interval, a first identification message carrying a third code identifying the first airline remote station (4);
- broadcasting, by the ground station (35), over the first (39) and second (40) communication data link, at a second time interval, a second identification message carrying a fourth code identifying the second airline remote station (5);
- receiving, by the first aerial vehicle, the first and the second identification message;
- verifying, by the first aerial vehicle, which one among the third and the fourth code matches with the first code stored in the first memory; and
- on the basis of a result of said verification, establishing a communication with the first or the second airline remote station (4, 5) through the ground station (35).

14. The method according to claim 13, further comprising the steps of:
- receiving, by the second aerial vehicle, the first and the second identification message;
- verifying, by the second aerial vehicle, which one among the third and the fourth code matches with the second code stored in the second memory; and
- on the basis of a result of said verification, establishing a communication with the first or the second airline remote station (4, 5) through the ground station (35).

## Patentansprüche

1. Bodenstation (35) zum Betrieb in einem Luft-Boden-Netzwerk (20) für Luft-zu-Boden- und Boden-zu-Luft-Kommunikation, wobei das Luft-Boden-Netzwerk (20) eine Luftnavigationsdienstbereitstellerfernstation (6) und/oder eine erste Fluggesellschaftsfernstation (4) und/oder eine zweite Fluggesellschaftsfernstation (5) beinhaltet, wobei die Bodenstation (35) aufweist:
- eine erste Kommunikationsschnittstelle (35a), die mit der ersten Fluggesellschaftsfernstation (4) verbindbar ist und konfiguriert ist, um für einen ersten zugriffsbeschränkten Datenfluss für Fluggesellschaftsbetriebskommunikation einen Nachrichtenaustausch zwischen der Bodenstation (35) und der ersten Fluggesellschaftsfernstation (4) bereitzustellen;
- eine zweite Kommunikationsschnittstelle (35b), die mit der Luftnavigationsdienstbereitstellerfernstation (6) verbindbar ist und konfiguriert ist, um für einen zweiten zugriffsbeschränkten Datenfluss für Luftverkehrsteuerung einen Nachrichtenaustausch zwischen der Bodenstation (35) und der Luftnavigationsdienstbereitstellerfernstation (6) bereitzustellen;
- eine dritte Kommunikationsschnittstelle (35c) die mit der zweiten Fluggesellschaftsfernstation (5) verbindbar ist und konfiguriert ist, um für einen dritten zugriffsbeschränkten Datenfluss für Fluggesellschaftsbetriebskommunikation einen Nachrichtenaustausch zwischen der Bodenstation (35) und der zweiten Fluggesellschaftsfernstation (5) bereitzustellen;
- ein Mittel (35d, 35e), das konfiguriert ist, um einen drahtlosen Übertragungskommunikationskanal (39, 40) eines VDL-Mode2-Typs für Luft-zu-Boden und Boden-zu-Luft aufzubauen;
- ein Mittel (35d, 35f, 35g), das konfiguriert ist, um über den drahtlosen Übertragungskommunikationskanal eine erste Kommunikationsdatenverbindung (39) mit einem ersten Fluggerät (2) aufzubauen, wobei die erste Kommunikationsdatenverbindung eine VDL-MODE2-Digitaldatenverbindung ist;
- ein Mittel (35e, 35f, 35g), das konfiguriert ist, um über den drahtlosen Übertragungskommunikationskanal eine zweite Kommunikationsdatenverbindung (40) mit einem zweiten Fluggerät (3) aufzubauen, wobei die zweite Kommunikationsdatenverbindung eine VDL-MODE2-Digitaldatenverbindung ist;
- ein Mittel (35b, 35d, 35e), das konfiguriert ist, um unter Verwendung der ersten und zweiten Kommunikationsdatenverbindung (39, 40) Luftverkehrsteuerungsnachrichten zwischen der Luftnavigationsdienstbereitstellerfernstation (6) und dem ersten bzw. dem zweiten Fluggerät (2, 3) auszutauschen;
- ein Mittel (35a, 35d, 35f, 35g), das konfiguriert ist, um unter Verwendung der ersten Kommunikationsdatenverbindung (39) Fluggesellschaftsbetriebskommunikationsnachrichten zwischen der ersten Fluggesellschaftsfernstation (4) und dem ersten Fluggerät (2) auszutauschen; und
- ein Mittel (35c, 35e, 35f, 35g), das konfiguriert ist, um unter Verwendung der zweiten Kommunikationsdatenverbindung (40) Fluggesellschaftsbetriebskommunikationsnachrichten zwischen der zweiten Fluggesellschaftsfernstation (5) und dem zweiten Fluggerät (3) auszutauschen.

2. Bodenstation gemäß Anspruch 1, wobei das Luft-Boden-Netzwerk (20) ferner ein erstes Kommunikationsdienstbereitstellernetzwerk (22) und ein zweites Kommunikationsdienstbereitstellernetzwerk (23) beinhaltet, wobei die Bodenstation (35) konfiguriert ist, um mit der ersten und zweiten Fluggesellschaftsfernstation (4, 5) durch das erste bzw. zweite Kommunikationsdienstbereitstellernetzwerk (22, 23) verbindbar zu sein.

3. Bodenstation gemäß Anspruch 2, wobei das erste Kommunikationsdienstbereitstellernetzwerk (22) konfiguriert ist, um gemäß einem ersten Protokollformat zu operieren, und das zweite Kommunikationsdienstbereitstellernetzwerk (23) konfiguriert ist, um gemäß einem zweiten Protokollformat zu operieren, wobei die erste Schnittstelle (35a) einen ersten Paketformatkonverter beinhaltet, um Austauschen von Fluggesellschaftsbetriebskommunikationsnachrichten zwischen dem ersten Kommunikationsdienstbereitstellernetzwerk (22) und der Bodenstation (35) zu erlauben; und die dritte Schnittstelle (35c) einen zweiten Paketformatkonverter beinhaltet, um Austauschen von Fluggesellschaftsbetriebskommunikationsnachrichten zwischen dem zweiten Kommunikationsdienstbereitstellernetzwerk (23) und der Bodenstation (35) zu erlauben.

4. Bodenstation gemäß Anspruch 2 oder 3, ferner einen Luft-Boden-Router (37) aufweisend, der zum Aufbauen von ATN-Verbindungen mit der Luftnavigationsdienstbereitstellerfernstation (6) konfiguriert ist und mobile Routingprozeduren auf transparente Weise Flugzeugpiloten und Fluglotsen bereitstellt und Lotse-zu-Pilot-Datenverbindungskommunikationsnachrichten unterstützt, die ATC-Dienste implementieren; und
ein Grenzzwischensystem (38), das zum Aufbauen von Verbindungen zwischen unterschiedlichen Routingdomains konfiguriert ist, insbesondere mit Grenz-ATN-Netzwerken, die zu anderen ANSPs gehören.

5. Bodenstation gemäß einem der vorhergehenden Ansprüche, wobei das erste Fluggerät (2) einen ersten Speicher aufweist, der einen ersten Code speichert, und das zweite Fluggerät (3) einen zweiten Speicher aufweist, der einen zweiten Code speichert, wobei die Bodenstation ferner aufweist:
- ein Mittel, das konfiguriert ist, um über die erste und die zweite Kommunikationsdatenverbindung (39, 40) bei einem ersten Zeitintervall eine erste Identifikationsnachricht zu übertragen, die einen dritten Code mitführt, der die erste Fluggesellschaftsfernstation (4) identifiziert; und
- ein Mittel, das konfiguriert ist, um über die erste und die zweite Kommunikationsdatenverbindung (39, 40) bei einem zweiten Zeitintervall eine zweite Identifikationsnachricht zu übertragen, die einen vierten Code mit sich führt, der die zweite Fluggesellschaftsfernstation (5) identifiziert.

6. Bodenstation gemäß einem der vorhergehenden Ansprüche, wobei das Mittel (35d, 35e, 35f, 35g), das konfiguriert ist, um die erste Datenkommunikationsverbindung (39) und die zweite Datenkommunikationsverbindung (40) aufzubauen, einen geteilten VDL-MODE2-Funk aufweist.

7. Luft-Boden-Netzwerk (20) für Luft-zu-Boden- und Boden-zu-Luft-Kommunikation, aufweisend:
- eine Bodenstation (35) gemäß einem der Ansprüche 1 bis 6;
- mindestens eine erste Fluggesellschaftsfernstation (4);
- mindestens eine zweite Fluggesellschaftsfernstation (5);
- ein erstes Kommunikationsdienstbereitstellernetzwerk (22), das kommunikativ mit der ersten Schnittstelle (35a) der Bodenstation (35) gekoppelt ist und die erste Fluggesellschaftsfernstation (4) mit der Bodenstation (35) verbindet;
- ein zweites Kommunikationsdienstbereitstellernetzwerk (23), das kommunikativ mit der dritten Schnittstelle (35c) der Bodenstation (35) gekoppelt ist und die zweite Fluggesellschaftsfernstation (5) mit der Bodenstation (35) verbindet;
- mindestens eine Luftnavigationsdienstbereitstellerfernstation (6), die kommunikativ mit der zweiten Schnittstelle (35b) der Bodenstation (35) verbunden ist.

8. Netzwerk gemäß Anspruch 7, ferner ein erstes Fluggerät (2), das einen ersten Speicher aufweist, der einen ersten Code speichert, und kommunikativ mit der Bodenstation (35) durch eine erste Kommunikationsdatenverbindung (39) gekoppelt ist, und ein zweites Fluggerät (3) aufweisend, das einen zweiten Speicher aufweist, der einen zweiten Code speichert, und kommunikativ mit der Bodenstation (35) durch eine zweite Kommunikationsdatenverbindung (40) gekoppelt ist, wobei die Bodenstation (3) ferner aufweist:
- ein Mittel, das konfiguriert ist, um über die erste (39) und die zweite (40) Kommunikationsdatenverbindung bei einem dritten Zeitintervall eine dritte Identifikationsnachricht zu übertragen, die einen fünften Code mitführt, der das erste Kommunikationsdienstbereitstellernetzwerk (22) identifiziert; und
- ein Mittel, das konfiguriert ist, um über die erste und die zweite Kommunikationsdatenverbindung bei einem vierten Zeitintervall eine vierte Identifikationsnachricht zu übertragen, die einen sechsten Code mitführt, der das zweite Kommunikationsdienstbereitstellernetzwerk (23) identifiziert,
wobei das erste Fluggerät (2) konfiguriert ist, um:
- die dritte und die vierte Identifikationsnachricht zu empfangen;
- zu verifizieren, welcher des fünften und sechsten Codes mit dem ersten Code übereinstimmt, der in dem ersten Speicher gespeichert ist; und
- auf der Basis eines Ergebnisses der Verifikation eine Kommunikation mit dem ersten oder dem zweiten Kommunikationsdienstbereitstellernetzwerk (22, 23) durch die Bodenstation (35) aufzubauen,
wobei das zweite Fluggerät (3) konfiguriert ist, um:
- die dritte und die vierte Identifikationsnachricht zu empfangen;
- zu verifizieren, welche des fünften und des sechsten Codes mit dem zweiten Code übereinstimmt, der in dem Speicher gespeichert ist; und
- auf der Basis eines Ergebnisses der Verifikation eine Kommunikation mit dem ersten oder dem zweiten Kommunikationsdienstbereitstellernetzwerk (22, 23) durch die Bodenstation (35) aufzubauen.

9. Netzwerk gemäß Anspruch 8, wobei die erste Kommunikationsdatenverbindung (39) und die zweite Kommunikationsdatenverbindung (40) über einen gemeinsamen VDL-MODE2-Kanal aufgebaut werden.

10. Verfahren für Luft-zu-Boden- und Boden-zu-Luft-Kommunikation, die Schritte aufweisend:
- Aufbauen durch eine Bodenstation (35) eines drahtlosen Übertragungskommunikationskanals (39, 40) eines VDL-Mode2-Typs für Luft-zu-Boden- und Boden-zu-Luft-Kommunikation;
- Aufbauen durch die Bodenstation (35) über den drahtlosen Übertragungskommunikationskanal einer ersten Datenkommunikationsverbindung (39) mit einem ersten Fluggerät (2), wobei die erste Kommunikationsdatenverbindung eine VDL-MODE2-Digitaldatenverbindung ist;
- Aufbauen durch die Bodenstation (35) über den drahtlosen Übertragungskommunikationskanal einer zweiten Kommunikationsdatenverbindung (40) mit einem zweiten Fluggerät (3), wobei die zweite Kommunikationsdatenverbindung eine VDL-MODE2-Digitaldatverbindung ist;
- kommunikatives Koppeln einer erste Fluggesellschaftsfernstation (4) mit einer ersten Schnittstelle (35a) der Bodenstation (35);
- Bereitstellen durch die erste Schnittstelle (35a) eines ersten zugriffsbeschränkten Datenflusses für Fluggesellschaftsbetriebskommunikationsnachrichtenaustausch zwischen der Bodenstation (35) und der ersten Fluggesellschaftsfernstation (4);
- kommunikatives Koppeln einer Luftnavigationsdienstbereitstellerfernstation (6) mit einer zweiten Schnittstelle (35b), die sich von der ersten Schnittstelle unterscheidet, der Bodenstation (35);
- Bereitstellen durch die zweite Schnittstelle (35b) eines zweiten zugriffsbeschränkten Datenflusses für Luftverkehrsteuerungsnachrichtenaustausch zwischen der Bodenstation (35) und der Luftnavigationsdienstbereitstellerfernstation (6);
- kommunikatives Koppeln einer zweiten Fluggesellschaftsfernstation (5) mit einer dritten Schnittstelle (35c) der Bodenstation (35);
- Bereitstellen durch die dritte Schnittstelle (35c) eines dritten zugriffsbeschränkten Datenflusses für Fluggesellschaftsbetriebskommunikationsnachrichtenaustausch zwischen der Bodenstation (35) und der zweiten Fluggesellschaftsfernstation (5);
- Verbinden durch die Bodenstation (35) der Luftnavigationsdienstbereitstellerfernstation (6) mit dem ersten Fluggerät (2) durch die erste Kommunikationsdatenverbindung (39), was Luftverkehrsteuerungsnachrichtenaustausch zwischen der Luftnavigationsdienstbereitstellerfernstation (6) und dem ersten Fluggerät erlaubt;
- Verbinden durch die Bodenstation (35) der ersten Fluggesellschaftsfernstation (4) mit dem ersten Fluggerät (2) durch die erste Kommunikationsdatenverbindung (39), was Fluggesellschaftsbetriebskommunikationsnachrichtenaustausch zwischen der ersten Fluggesellschaftsfernstation (4) und dem ersten Fluggerät erlaubt; und
- Verbinden durch die Bodenstation (35) der zweiten Fluggesellschaftsfernstation (5) mit dem zweiten Fluggerät (3) durch die zweite Kommunikationsdatenverbindung (40), was Fluggesellschaftsbetriebskommunikationsnachrichtenaustausch zwischen der zweiten Fluggesellschaftsfernstation (5) und dem zweiten Fluggerät erlaubt.

11. Verfahren gemäß Anspruch 10, wobei die Schritte zum Aufbauen durch die Bodenstation (35) der ersten und zweiten Kommunikationsdatenverbindung (39, 40) Aufbauen der ersten und der zweiten Kommunikationsdatenverbindung (39, 40) über einen gleichen Frequenzbereich umfasst.

12. Verfahren gemäß Anspruch 10 oder 11, wobei der Schritt zum kommunikativen Koppeln der ersten Fluggesellschaftsfernstation (4) mit der ersten Schnittstelle der Bodenstation (35) Einsetzen eines ersten Kommunikationsdienstbereitstellernetzwerks (22) und kommunikatives Koppeln der ersten Fluggesellschaftsfernstation (4) und der Bodenstation (35) mit dem ersten Kommunikationsdienstbereitstellernetzwerk (22) umfasst; und der Schritt zum kommunikativen Koppeln der zweiten Fluggesellschaftsfernstation (5) mit der dritten Schnittstelle der Bodenstation (35) Einsetzen eines zweiten Kommunikationsdienstbereitstellernetzwerks (23) und kommunikatives Koppeln der zweiten Fluggesellschaftsfernstation (5) und der Bodenstation (35) mit dem zweiten Kommunikationsdienstbereitstellernetzwerk (23) umfasst.

13. Verfahren gemäß einem der Ansprüche 10 bis 12, wobei das erste Fluggerät (2) einen ersten Speicher aufweist, der einen ersten Code speichert, und das zweite Fluggerät (3) einen zweiten Speicher aufweist, der einen zweiten Code speichert,
wobei das Verfahren ferner die Schritte aufweist:
- Übertragen durch die Bodenstation (35) über die erste (39) und die zweite (40) Kommunikationsdatenverbindung bei einem ersten Zeitintervall einer ersten Identifikationsnachricht, die einen dritten Code mitführt, der die erste Fluggesellschaftsfernstation (4) identifiziert;
- Übertragen durch die Bodenstation (35) über die erste (39) und die zweite (40) Kommunikationsdatenverbindung bei einem zweiten Zeitintervall einer zweiten Identifikationsnachricht, die einen vierten Code mitführt, der die zweite Fluggesellschaftsfernstation (5) identifiziert;
- Empfangen durch das erste Fluggerät der ersten und der zweiten Identifikationsnachricht;
- Verifizieren durch das erste Fluggerät, welcher des dritten und des vierten Codes mit dem ersten Code übereinstimmt, der in dem ersten Speicher gespeichert ist; und
- auf der Basis eines Ergebnisses der Verifikation, Aufbauen einer Kommunikation mit der ersten oder der zweiten Fluggesellschaftsfernstation (4, 5) durch die Bodenstation (35).

14. Verfahren gemäß Anspruch 13, ferner die Schritte aufweisend:
- Empfangen durch das zweite Fluggerät, der ersten und der zweiten Identifikationsnachricht;
- Verifizieren durch das zweite Fluggerät, welcher des dritten und des vierten Codes mit dem zweiten Code übereinstimmt, der in dem zweiten Speicher gespeichert ist; und
- auf der Basis eines Ergebnisses der Verifikation Aufbauen einer Kommunikation mit der ersten oder der zweiten Fluggesellschaftsfernstation (4, 5) durch die Bodenstation (35).

## Revendications

1. Station au sol (35) permettant de travailler dans un réseau air-sol (20) pour une communication dans le sens air-sol et sol-air, le réseau air-sol (20) incluant au moins une station éloignée de fournisseur de service de navigation aérienne (6), une première station éloignée de compagnie aérienne (4), et une seconde station éloignée de compagnie aérienne (5), la station au sol (35) comprenant :
- une première interface de communication (35a) pouvant être connectée à la première station éloignée de compagnie aérienne (4) configurée pour fournir un premier flux de données isolées pour un échange de messages de communication opérationnelle des compagnies aériennes entre la station au sol (35) et la première station éloignée de compagnie aérienne (4) ;
- une deuxième interface de communication (35b) pouvant être connectée à la station éloignée de fournisseur de service de navigation aérienne (6) configurée pour fournir un second flux de données isolées pour un échange de messages de contrôle de la circulation aérienne entre la station au sol (35) et la station éloignée de fournisseur de service de navigation aérienne (6) ;
- une troisième interface de communication (35c) pouvant être connectée à la seconde station éloignée de compagnie aérienne (5) configurée pour fournir un troisième flux de données isolées pour un échange de messages de communication opérationnelle des compagnies aériennes entre la station au sol (35) et la seconde station éloignée de compagnie aérienne (5) ;
- des moyens configurés pour établir (35d, 35e) un canal de communication sans fil radiodiffusée (39, 40) de type VDL mode 2 pour une communication dans le sens air-sol et sol-air ;
- des moyens configurés pour établir (35d ; 35f ; 35g), sur ledit canal de communication sans fil radiodiffusée, un premier lien de données de communication (39) avec un premier véhicule aérien (2), le premier lien de données de communication étant un lien de données numériques VDL mode 2 ;
- des moyens configurés pour établir (35e ; 35f ; 35g), sur ledit canal de communication sans fil radiodiffusée, un second lien de données de communication (40) avec un second véhicule aérien (3), le second lien de données de communication étant un lien de données numériques VDL mode 2 ;
- des moyens configurés pour échanger (35b, 35d, 35e), en utilisant lesdits premier et second liens de données de communication (39, 40), des messages de contrôle de la circulation aérienne entre la station éloignée de fournisseur de service de navigation aérienne (6) et le premier, et respectivement, le second véhicule aérien (2, 3) ;
- des moyens configurés pour échanger (35a, 35d ; 35f ; 35g), en utilisant ledit premier lien de données de communication (39), des messages de communication opérationnelle des compagnies aériennes entre la première station éloignée de compagnie aérienne (4) et le premier véhicule aérien (2) ; et
- des moyens configurés pour échanger (35c, 35e ; 35f ; 35g), en utilisant ledit second lien de données de communication (40), des messages de communication opérationnelle des compagnies aériennes entre la seconde station éloignée de compagnie aérienne (5) et le second véhicule aérien (3).

2. Station au sol selon la revendication 1, dans laquelle le réseau air-sol (20) inclut en outre un premier réseau de fournisseur de service de communication (22) et un second réseau de fournisseur de service de communication (23), la station au sol (35) étant configurée pour pouvoir être connectée à la première et à la seconde station éloignée de compagnie aérienne (4, 5) par l'intermédiaire, respectivement, du premier et du second réseau de fournisseur de service de communication (22, 23).

3. Station au sol selon la revendication 2, dans laquelle le premier réseau de fournisseur de service de communication (22) est configuré pour fonctionner selon un premier format de protocole, et le second réseau de fournisseur de service de communication (23) est configuré pour fonctionner selon un second format de protocole, la première interface (35a) incluant un premier convertisseur de format de paquet pour permettre un échange de messages de communication opérationnelle des compagnies aériennes entre le premier réseau de fournisseur de service de communication (22) et la station au sol (35) ; et la troisième interface (35c) incluant un second convertisseur de format de paquet permettant un échange de messages de communication opérationnelle des compagnies aériennes entre le second réseau de fournisseur de service de communication (23) et la station au sol (35).

4. Station au sol selon la revendication 2 ou 3, comprenant en outre un routeur air-sol (37), configuré pour établir des connexions ATN avec la station éloignée de fournisseur de service de navigation aérienne (6), fournissant des procédures de routage mobile de manière transparente pour des pilotes d'aéronef et des contrôleurs de vol, et supportant des messages de communication de lien de données dans le sens contrôleur-pilote implémentant des services ATC ; et
un système intermédiaire de délimitation (38) configuré pour établir des connexions entre différents domaines de routage, en particulier avec des réseaux ATN de délimitation appartenant à d'autres ANSP.

5. Station au sol selon l'une quelconque des revendications précédentes, dans laquelle le premier véhicule aérien (2) a une première mémoire stockant un premier code, et le second véhicule aérien (3) a une seconde mémoire stockant un second code, la station au sol comprenant en outre :
- des moyens configurés pour radiodiffuser, sur le premier et le second lien de données de communication (39, 40), à un premier intervalle de temps, un premier message d'identification portant un troisième code identifiant la première station éloignée de compagnie aérienne (4) ; et
- des moyens configurés pour radiodiffuser, sur le premier et le second lien de données de communication (39, 40), à un second intervalle de temps, un second message d'identification portant un quatrième code identifiant la seconde station éloignée de compagnie aérienne (5).

6. Station au sol selon l'une quelconque des revendications précédentes, dans laquelle lesdits moyens configurés pour établir (35d, 35e ; 35f ; 35g) le premier lien de communication de données (39) et le second lien de communication de données (40) comprennent une radio VDL mode 2 partagée.

7. Réseau air-sol (20) pour une communication dans le sens air-sol et sol-air, comprenant :
- une station au sol (35) selon l'une quelconque des revendications 1 à 6 ;
- au moins une première station éloignée de compagnie aérienne (4) ;
- au moins une seconde station éloignée de compagnie aérienne (5) ;
- un premier réseau de fournisseur de service de communication (22), couplé en communication avec la première interface (35a) de la station au sol (35), connectant la première station éloignée de compagnie aérienne (4) à la station au sol (35) ;
- un second réseau de fournisseur de service de communication (23), couplé en communication avec la troisième interface (35c) de la station au sol (35), connectant la seconde station éloignée de compagnie aérienne (5) à la station au sol (35) ;
- au moins une station éloignée de fournisseur de service de navigation aérienne (6), couplée en communication avec la deuxième interface (35b) de la station au sol (35).

8. Réseau selon la revendication 7, comprenant en outre un premier véhicule aérien (2) ayant une première mémoire stockant un premier code et couplé en communication avec la station au sol (35) par l'intermédiaire d'un premier lien de données de communication (39), et un second véhicule aérien (3) ayant une seconde mémoire stockant un second code et couplé en communication avec la station au sol (35) par l'intermédiaire d'un second lien de données de communication (40), la station au sol (35) comprenant en outre :
- des moyens configurés pour radiodiffuser sur le premier (39) et le second (40) lien de données de communication, à un troisième intervalle de temps, un troisième message d'identification portant un cinquième code identifiant le premier réseau de fournisseur de service de communication (22) ; et
- des moyens configurés pour radiodiffuser, sur le premier (39) et le second (40) lien de données de communication, à un quatrième intervalle de temps, un quatrième message d'identification portant un sixième code identifiant le second réseau de fournisseur de service de communication (23),
le premier véhicule aérien (2) étant configuré pour :
- recevoir le troisième et le quatrième message d'identification ;
- vérifier lequel parmi le cinquième et le sixième code concorde avec le premier code stocké dans la première mémoire ; et
- sur la base d'un résultat de ladite vérification, établir une communication avec le premier ou le second réseau de fournisseur de service de communication (22, 23) par l'intermédiaire de la station au sol (35),
le second véhicule aérien (3) étant configuré pour :
- recevoir le troisième et le quatrième message d'identification ;
- vérifier lequel parmi le cinquième et le sixième code concorde avec le deuxième code stocké dans la seconde mémoire ; et
- sur la base d'un résultat de ladite vérification, établir une communication avec le premier ou le second réseau de fournisseur de service de communication (22, 23) par l'intermédiaire de la station au sol (35).

9. Réseau selon la revendication 8, dans lequel le premier lien de données de communication (39) et le second lien de données de communication (40) sont établis sur un canal VDL mode 2 commun.

10. Procédé de communication dans le sens air-sol et sol-air, comprenant les étapes de :
- établissement, par une station au sol (35), d'un canal de communication sans fil radiodiffusée (39, 40) de type VDL mode 2 pour une communication dans le sens air-sol et sol-air ;
- établissement, par la station au sol (35) sur le canal de communication sans fil radiodiffusée, d'un premier lien de données de communication (39) avec un premier véhicule aérien (2), le premier lien de données de communication étant un lien de données numériques VDL mode 2 ;
- établissement, par la station au sol (35) sur le canal de communication sans fil radiodiffusée, d'un second lien de données de communication (40) avec un second véhicule aérien (3), le second lien de données de communication étant un lien de données numériques VDL mode 2 ;
- couplage en communication d'une première station éloignée de compagnie aérienne (4) à une première interface (35a) de la station au sol (35) ;
- fourniture, par la première interface (35a), d'un premier flux de données isolées pour un échange de messages de communication opérationnelle des compagnies aériennes entre la station au sol (35) et la première station éloignée de compagnie aérienne (4) ;
- couplage en communication d'une station éloignée de fournisseur de service de navigation aérienne (6) à une deuxième interface (35b), différente de ladite première interface, de la station au sol (35) ;
- fourniture, par la deuxième interface (35b), d'un second flux de données isolées pour un échange de messages de contrôle de la circulation aérienne entre la station au sol (35) et la station éloignée de fournisseur de service de navigation aérienne (6) ;
- couplage en communication d'une seconde station éloignée de compagnie aérienne (5) à une troisième interface (35c) de la station au sol (35) ;
- fourniture, par la troisième interface (35c), d'un troisième flux de données isolées pour un échange de messages de communication opérationnelle des compagnies aériennes entre la station au sol (35) et la seconde station éloignée de compagnie aérienne (5) ;
- connexion, par la station au sol (35), de la station éloignée de fournisseur de service de navigation aérienne (6) avec ledit premier véhicule aérien (2) par l'intermédiaire du premier lien de données de communication (39), permettant un échange de messages de contrôle de la circulation aérienne entre la station éloignée de fournisseur de service de navigation aérienne (6) et le premier véhicule aérien ;
- connexion, par la station au sol (35), de la première station éloignée de compagnie aérienne (4) au premier véhicule aérien (2) par l'intermédiaire du premier lien de données de communication (39), permettant un échange de messages de communication opérationnelle des compagnies aériennes entre la première station éloignée de compagnie aérienne (4) et le premier véhicule aérien ; et
- connexion, par la station au sol (35), de la seconde station éloignée de compagnie aérienne (5) au second véhicule aérien (3) par l'intermédiaire du second lien de données de communication (40), permettant un échange de messages de communication opérationnelle des compagnies aériennes entre la seconde station éloignée de compagnie aérienne (5) et le second véhicule aérien.

11. Procédé selon la revendication 10, dans lequel l'étape d'établissement, par la station au sol (35) des premier et second liens de données de communication (39, 40) comprend l'établissement des premier et second liens de données de communication (39, 40) sur une même plage de fréquences.

12. Procédé selon la revendication 10 ou 11, dans lequel l'étape de couplage en communication de la première station éloignée de compagnie aérienne (4) à la première interface de la station au sol (35) comprend le déploiement d'un premier réseau de fournisseur de service de communication (22) et le couplage en communication de la première station éloignée de compagnie aérienne (4) et de la station au sol (35) au premier réseau de fournisseur de service de communication (22) ; et l'étape de couplage en communication de la seconde station éloignée de compagnie aérienne (5) à la troisième interface de la station au sol (35) comprend le déploiement d'un second réseau de fournisseur de service de communication (23) et le couplage en communication de la seconde station éloignée de compagnie aérienne (5) et de la station au sol (35) au second réseau de fournisseur de service de communication (23).

13. Procédé selon l'une quelconque des revendications 10 à 12, dans lequel le premier véhicule aérien (2) a une première mémoire stockant un premier code, et le second véhicule aérien (3) a une seconde mémoire stockant un second code,
le procédé comprenant en outre les étapes de :
- radiodiffusion, par la station au sol (35), sur le premier (39) et le second (40) lien de données de communication, à un premier intervalle de temps, d'un premier message d'identification portant un troisième code identifiant la première station éloignée de compagnie aérienne (4) ;
- radiodiffusion, par la station au sol (35), sur le premier (39) et le second (40) lien de données de communication, à un second intervalle de temps, d'un second message d'identification portant un quatrième code identifiant la seconde station éloignée de compagnie aérienne (5) ;
- réception, par le premier véhicule aérien, du premier et du second message d'identification ;
- vérification, par le premier véhicule aérien, duquel parmi le troisième et le quatrième code concorde avec le premier code stocké dans la première mémoire ; et
- sur la base d'un résultat de ladite vérification, établissement d'une communication avec la première ou la seconde station éloignée de compagnie aérienne (4, 5) par l'intermédiaire de la station au sol (35).

14. Procédé selon la revendication 13, comprenant en outre les étapes de :
- réception, par le second véhicule aérien, du premier et du second message d'identification ;
- vérification, par le second véhicule aérien, duquel parmi le troisième et le quatrième code concorde avec le second code stocké dans la seconde mémoire ; et
- sur la base d'un résultat de ladite vérification, établissement d'une communication avec la première ou la seconde station éloignée de compagnie aérienne (4, 5) par l'intermédiaire de la station au sol (35).
